# EUROPÄISCHE PATENTSCHRIFT

(11) **EP 3 576 994 B1**
(45) Veröffentlichungstag und Bekanntmachung des Hinweises auf die Patenterteilung: **16.03.2022**
(21) Anmeldenummer: 18702965.7
(22) Anmeldetag: 30.01.2018
(51) Int. Cl.: B60T 8/17, B60T 8/88, B60T 17/22

(54) **SCHNITTSTELLENELEMENT FÜR EIN FAHRZEUG**
INTERFACE ELEMENT FOR A VEHICLE
ÉLÉMENT D'INTERFACE POUR UN VÉHICULE

(30) Priorität: 02.02.2017 DE 102017102074
(43) Veröffentlichungstag der Anmeldung: 11.12.2019
(73) Patentinhaber: KNORR-BREMSE Systeme für Nutzfahrzeuge GmbH, 80809 München (DE)
(72) Erfinder: KLUFTINGER, Andre, 63924 Kleinheubach (DE); MEDERER, Martin, 92318 Neumarkt (DE); LEINUNG, Andreas, 81245 München (DE); THIERFELDER, Felix, 85715 Unterschleißheim (DE)
(86) Internationale Anmeldenummer: PCT/EP2018/052230
(87) Internationale Veröffentlichungsnummer: WO 2018/141724

(56) Entgegenhaltungen:
- EP-A1- 2 333 636
- WO-A1-00/60548
- WO-A2-2013/136306
- DE-A1- 3 036 864
- DE-A1- 19 933 688
- DE-A1-102005 049 483
- DE-A1-102008 034 078
- US-A1- 2010 256 843

## Beschreibung

Die vorliegende Erfindung betrifft ein Schnittstellenelement für ein Fahrzeugs, Insbesondere für ein Nutzfahrzeug oder Schienenfahrzeug, mit elektronischen Komponenten, ein Fahrzeug, insbesondere Nutzfahrzeug oder Schienenfahrzeug, mit wenigstens einem derartigen Steckelement sowie ein Verfahren zur zumindest teilweisen Messung und/oder Steuerung und/oder Regelung bzw. Überwachung eines Nutzfahrzeugs.

Aus dem Stand der Technik ist bereits bekannt, in Fahrzeuge, insbesondere Nutzfahrzeugen eine zentrale Steuerung und Regelung sowie Überwachung des Fahrzustandes des Nutzfahrzeuges vorzusehen bzw. die intelligenten Auswertungen in wenigen, größeren Steuergeräten zusammenzufassen. Allerdings wird damit in der Regel die Fahrzeugelektronik und die Steuerung und/oder Regelung auf den Status Quo zum Zeitpunkt der Entwicklung des Nutzfahrzeuges festgelegt. Nutzfahrzeuge haben jedoch eine vergleichsweise lange Lebensdauer.

Aus der WO 2002/33790 A1 ist bereits eine Steckverbindung bekannt, bei der in das Ende eines Lichtleiters zusammen mit einem optoelektronischen Signalwandler eine elektronische Steckverbindung integriert ist.

Aus der DE 10 2007 043 887 A1 ist weiter bereits ein Stecker mit integrierter Elektronik bekannt. Hier ist im Steckergehäuse eine elektronische Platine vorhanden.

Ein weiteres Beispiel für einen Stecker mit integrierter Elektronik ist die DE 10 2005 060 798 A1, die einen Stecker mit integrierter Elektronik für eine elektromagnetische Signalübertragung sowie Kontakte für Energieübertragung aufweist.

Die vorgenannten Beispiele stammen nicht aus dem Nutzfahrzeugbereich oder Schienenfahrzeugbereich.

Es ist die Aufgabe der vorliegenden Erfindung, ein Steckelement, ein Nutzfahrzeug sowie ein Verfahren zur Steuerung und/oder Regelung eines Nutzfahrzeugs in vorteilhafter Weise weiterzubilden, insbesondere dahingehend, dass elektronische Systeme für ein Nutzfahrzeug einfach nachgerüstet, Redundanzen in der Steuerung und/oder Regelung in einem Nutzfahrzeug einfach hinzugefügt und die Steuerung und/oder Regelung eines Nutzfahrzeugs insgesamt verbessert werden kann.

Diese Aufgabe wird erfindungsgemäß gelöst durch ein Schnittstellenelement für ein Nutzfahrzeug mit den Merkmalen des Anspruchs 1.

Danach ist vorgesehen, dass ein Schnittstellenelement für ein Nutzfahrzeug elektronische Komponenten aufweist, wobei die elektronischen Komponenten wenigstens einen Anschluss an wenigstens eine Datenschnittstelle eines Nutzfahrzeugs aufweisen, wobei der Anschluss geeignet und beschaffen ist zum Austausch von Messdaten und/oder Steuerungs- und/oder Regelungsdaten zur Messung von betriebsrelevanten Daten und/oder Steuerung und/oder Regelung von elektronischen Komponenten, wobei die elektronischen Komponenten weiter wenigstens eine integrierte Mess- und/oder Steuerungs- und/oder Regelungseinheit aufweisen.

Die Erfindung basiert auf dem Grundgedanken, dass ortsunabhängig von der zentralen Steuerung und/oder Regelung sowie der zugehörigen Signalleitungen und Komponenten eines Nutzfahrzeuges zusätzlich mittels eines zusätzlichen, intelligenten Schnittstellenelements an nahezu beliebiger Stelle des Nutzfahrzeuges eine dezentrale Steuerungs- und/oder Regelungselektronik angebracht werden kann, die unabhängig von der eigentlichen Steuerung und/oder Regelung des Nutzfahrzeugs zusätzlich Steuerungs- und/oder Regelungsaufgaben übernehmen kann. Weiter ist das Schnittstellenelement in der Lage Messdaten entgegen zu nehmen, aber auch entsprechend weiterzuleiten. Auch eine Verarbeitung von Messdaten ist möglich. Darauf aufbauend kann dann die Steuerung und/oder Regelung durch das Schnittstellenelement erfolgen.

Es wird somit (zusätzliche) Steuerungs- und/oder Regelungsintelligenz in ein Schnittstellenelement für ein Nutzfahrzeug integriert, wobei dieses Schnittstellenelement ortsunabhängig an beliebiger Stelle am Nutzfahrzeug angebracht werden kann.

Nicht integriert in das Schnittstellenelement können aber insbesondere Sensoren und/oder Aktuatoren sein.

Das Schnittstellenelement kann also keinen Sensor aufweisen.

Außerdem kann das Schnittstellenelement keinen Aktuator aufweisen.

Hierdurch wird ein einfacher Aufbau des Schnittstellenelements ermöglicht.

Weiter ist denkbar, dass das Schnittstellenelement Ansteuerelemente wie Endstufen oder dergleichen aufweist, mittels derer z.B. das für einen Aktuator nötige elektrische Steuersignal erzeugbar ist.

Denkbar ist aber auch, dass die Datenschnittstelle jeweils eine unidirektionale Datenschnittstelle umfasst, die eine Datenübermittlung in die eine, aber auch in die andere Richtung ermöglicht. Durch die Integration von intelligenter Elektronik in ein Steckelement kann unabhängig von im Fahrzeug vorhandenem Bauraum bzw. dem im Zusammenhang mit der zentralen Fahrzeugsteuerung und -regelung zur Verfügung stehenden Bauraum weiteren Steuerungs- und Regelungselektronik dem Nutzfahrzeug hinzugefügt werden. Der Bauraum wird defacto durch das Gehäuse des Schnittstellenelements bzw. das Kabel des Schnittstellenelements mitgebracht. Ein Nachrüsten von Steuerungs- und/oder Regelungskomponenten für das Nutzfahrzeug wird so einfach und kostengünstig möglich. Auch der Aufbau von redundanten Systemen wird so erleichtert. Denn durch das Schnittstellenelement wird es möglich, zusätzliche Elektronik an geeigneten Stellen hinzuzufügen und redundante Systeme aufzubauen.

Denkbar ist insbesondere auch, dass aus mehreren miteinander vernetzten Schnittstellenelementen ein intelligentes Schnittstellenelemente-Netzwerk ausgebildet wird. Durch ein derartiges Schnittstellenelemente-Netzwerk kann insoweit bzw. im Rahmen des entsprechenden funktionalen Subsystems ein vollständiger Verzicht auf weitere Steuergeräte erfolgen bzw. ermöglicht werden. Die Schnittstellenelemente, die das Schnittstellenelemente-Netzwerk müssen somit nicht zwingend an das zentrale Steuergerät des Fahrzeugs angeschlossen sein.

Des Weiteren kann vorgesehen sein, dass die integrierte Steuerungs- und/oder Regelungseinheit ein Mikrocontroller ist oder einen Mikrocontroller umfasst. Durch den Einsatz eines Mikrokontrollers wird es einfach, eine integrierte Steuerungs- und/oder Regelungseinheit auszubilden.

Die integrierte Messdaten und/oder Steuerungs- und/oder Regelungseinheit kann weiter einen Prozessor und/or eine integrierte Schaltung und/oder oder wenigstens eine Datenschnittstelle umfassen. Dadurch wird der Datenaustausch mit anderen Komponenten des Fahrzeugs ermöglicht. Weiter wird hierdurch auch erreicht, dass Daten empfangen, verarbeitet und weiterversandt werden können.

Erfindungsgemäß wird das Schnittstellenelement als Steckelement ausgebildet. Hierdurch wird eine einfache Montage ermöglicht. Auch das Nachrüsten des Schnittstellenelementes in bereits in Betrieb befindlichen Fahrzeugen wird hierdurch erleichtert. Denkbar ist, dass als Steckmöglichkeit normierte Steckplätze nach einem geeigneten Industriestandard gewählt werden.

Denkbar ist auch, dass das Schnittstellenelement in einem Kabel oder als Kabelelement, insbesondere Verbindungskabel ausgebildet ist. Diese Ausgestaltungsmöglichkeit erleichtert ebenfalls das Nachrüsten von bereits im Betrieb befindlichen Fahrzeugen. Dezentrale intelligente, zusätzliche Netze bestehend aus mehreren Schnittstellenelementen können hierdurch etabliert werden.

Die elektronischen Komponenten können wasserdicht geschützt ausgebildet sein. Insbesondere ist denkbar, dass das Schnittstellenelement im montierten Zustand wasserdicht seine elektronischen Komponenten abdichtet. Mit anderen Worten kann vorgesehen sein, dass die elektronischen Komponenten wasserdicht geschützt ausgebildet sind. Hierdurch wird eine robuste Konfiguration des Schnittstellenelements ermöglicht. Eine Anordnung des Schnittstellenelements an nahezu jedem beliebigen Ort des Nutzfahrzeugs mit nahezu beliebigen Umweltanforderungen wird hierdurch möglich. Hierzu kommen auch Stellen am Nutzfahrzeug in Betracht, die beispielsweise in der Nähe der Reifen oder unterhalb der Fahrerkabine oder im Zusammenhang mit den Aufbauten des Nutzfahrzeuges befestigt werden.

Weiter ist möglich, dass das Schnittstellenelement mit einen Sensor verbindbar oder verbunden ist.

Insbesondere kann vorgesehen sein, dass der Sensor ein Raddrehzahlsensor ist.

Das Schnittstellenelement kann an wenigstens einen Sensor angeschlossen sein. Mittels dieser intelligenten Sensorauswertung können bestimmte Werte, die das Fahrverhalten des Fahrzeugs kontrollieren oder Betriebszustände des Fahrzeugs beschreiben, weiterverarbeitet oder plausibilisiert werden. Denkbar sind in diesem Zusammenhang insbesondere Auswertungen von Beschleunigungssensoren, Temperatursensoren, Schwingungssensoren, Drucksensoren, Raddrehzahlsensoren oder dergleichen.

Das Schnittstellenelement mit einem Aktuator verbindbar oder verbunden ist.

Bei dem Aktuator kann es sich beispielsweise um Ansteuerelemente für Ventile oder Betätigungselemente oder Schaltelemente jeglicher Art oder dergleichen handeln.

Es ist also somit möglich, dass ein Einlesen von Sollwerten über eine Datenschnittstelle oder eine Ausgabe von Eingangswerten über eine Datenschnittstelle des Schnittstellenelements ermöglicht ist. Auch können Aktuatoren angesteuert werden über mindestens einen digitalen oder analogen Ausgang des Schnittstellenelements. Auch ein Einlesen von Messwerten über einen derartigen analogen oder digitalen Eingang ist denkbar.

Eine mögliche Anwendung des Schnittstellenelements, sofern an einen Sensor angeschlossen, könnte dergestalt sein, dass nur (z.B. analoge) Messsignale mttels des Schnittstellenelements ausgewertet und diese in einem standardisierten Datenformat auf einen Datenbus gelegt werden, so dass alle Steuergeräte, also zum Beispiel auch zwei sich redundant absichernde Steuergeräte gleichzeitig auf dieses eine Messignal im Datenformat mit geringem Zusatzaufwand zugreifen können, indem beide Steuergeräte kostengünstig lediglich an denselben Datenbus angeschlossen sein müssen. Ein Beispiel wäre die Erfassung der Raddrehzahlsignale, die in dem Schnittstellenelement geleistet werden könnte.Gleichzeitig könnte das Schnittstellenelement diese Signale eben auch auf Fehler überwachen und erkannte Fehler über spezielle Werte des digitalen Messsignals für beliebig viele Steuergeräte auf den Datenbus legen. So wird das Messsignal für alle angeschlossenen Steuergeräte allein über das Schnittstellenelement zu einem vervielfältigten, abgesicherten Messsignal, das ohne Aufwand auf Seiten der Zentralsteuergeräte von diesen allein über den Datenwert als gültiger oder eben unplausibler Messwert erkannt werden kann.

Als kleinste, denkbare Einheit aus einfachsten Schnittstellenelementen wäre dies die einfache Kopplung von zwei Schnittstellenelementen an ihrer Datenschnittstelle, wobei ein Schnittstellenelement einen Sensor ausliest und das andere einen Aktuator ansteuert. Beide Schnittstellenelemente könnten miteinander über die Datenschnittstelle die Regelungsgrößen austauschen,und in einem Regelkreis Messwerte auf der einen Seite des Verbunds einlesen und Aktuatoren auf der anderen Seite ansteuern.

Der Anschluss an die wenigstens eine Datenschnittstelle eines Fahrzeugs kann ein kabelgebundener Anschluss sein oder einen kabelgebundenen Anschluss umfassen.

Der Anschluss kann auch ein Funkanschluss sein oder einen Funkanschluss umfassen.

Des Weiteren kann vorgesehen sein, dass der Anschluss ein optischer Anschluss ist oder einen optischen Anschluss umfasst.

Denkbar ist weiter, dass der Anschluss ein magnetischer Anschluss ist oder einen magnetischen Anschluss umfasst.

Das Schnittstellenelement an eine externe Energieversorgungsquelle anschließbar oder angeschlossen ist.

Alternativ oder zusätzlich kann vorgesehen sein, dass das Schnittstellenelement an eine interne Energieversorgungsquelle anschließbar oder angeschlossen ist, insbesondere wobei die interne Energieversorgungsquelle eine Batterie ist oder umfasst.

Das Schnittstellenelement kann also über eine andere Spannungsquelle mit elektrischer Energie versorgt werden oder über eine integrierte Batterie. Hierzu kann eine Abschaltmöglichkeit im Schnittstellenelement im Hinblick auf Energieeinsparung vorhanden sein.

Denkbar ist, dass unter gewissen Rahmenbedingungen ein Überspannungsschutz im Schnittstellenelement verzichtbar ist und daher das Schnittstellenelement keinen Überspannungsschutz aufweist.

Zu beachten ist, dass elektronische Komponenten im Automobilbereich in der Regel gegen Überspannung abgesichert sein müssen, damit sie nicht zerstört werden können. Solche Spannungsspitzen können zum Beispiel von den Schaltvorgängen der Lichtmaschine herrühren. Wird das Schnittstellenelement direkt von der Lichtmaschine/Batterie des Fahrzeugs versorgt, wäre vermutlich ein integrierter Überspannungsschutz nötig. Dieser kann aber entfallen, wenn das Schnittstellenelement über eines oder redundant mehrere Steuergeräte stromversorgt würde, die eine Überspannung durch eigene Schutzvorrichtung bereits abfangen. Das Schnittstellenelement wäre somit aufgrund der Schutzvorrichtungen des/der externen/r Steuergeräte(s) und der zugehörigen, das jeweilige Steuergerät mit Spannung versorgenden Spannungsquelle mitabgesichert.

Die im Schnittstellenelement integrierte Steuerungs- und/oder Regelungseinheit kann beispielsweise eine Software oder einen Algorithmus zur Regelung eines Aktuators oder zur Verarbeitung eines Sensorsignals aufweisen. Insbesondere ist denkbar, dass eine Software zur Erfassung einer Drehzahl, insbesondere einer Raddrehzahl oder derer Drehzahlen des Nutzfahrzeugs vorhanden ist. In diesem Zusammenhang ist auch an Beschleunigungssensoren zu denken, um beispielsweise die Raddrehzahl gegen die auf den Beschleunigungssensor wirkenden Beschleunigungen abgleichen zu können.

Das Schnittstellenelement kann als Gateway zwischen zwei Datenbusschnittstellen dienen.

Denkbar ist aber auch, dass das Schnittstellenelement als Regler, zum Beispiel als kaskadierte Führungsgrößenregelung, die den Aktuator in Abhängigkeit eines Sollwertes vom Datenbus ansteuert, genutzt werden.

In diesem Zusammenhang ist auch denkbar, das Schnittstellenelement in vorhandene Fahrzeugstrukturen zu integrieren, um beispielsweise auch einen Kabeltausch vornehmen zu können.

Auch kann vorgesehen sein, dass das Schnittstellenelement mit seiner Steuerungs- und/oder Regelungseinheit eine Speichereinheit aufweist, so dass beispielsweise auch Daten eingespeichert werden können. In diesem Fall wäre es möglich, die Steuerungs- und/oder Regelungseinheit als Datenlogger oder als Blackboxstecker auszugestalten. Funktionen wie Look-Up-Table und/oder Datenkonvertierung können ebenfalls vorgesehen sein.

Es kann eine einkanalige oder auch mehrkanalige Verarbeitung von Sensoren oder eine Ansteuerung von Aktuatoren erfolgen.

Auch ist denkbar, ein halbschaliges Gehäuse mit einer abdichtenden Füllung zur Erreichung der Wasserdichtheit zu erreichen. Denkbar ist auch, dass die Wasserdichtheit durch ganz oder teilweisen Verguss der Elemente des Schnittstellenelements erreicht wird. Alternativ ist auch eine Vollumspritzung des Steckers oder eine einteilige Ausführung des Steckers denkbar. Es ist auch denkbar, die elektronischen Komponenten über ein an den Enden abgedichtetes Kabel wasserdicht einzuschließen.

Insbesondere kann das Schnittstellenelement verwendet werden, um eine Ansteuerung von Ventilen des ABS-Systems des Nutzfahrzeugs, des elektronischen Bremssystems des Nutzfahrzeugs, der Luftfederung des Nutzfahrzeugs oder einer Luftaufbereitungsanlage des Nutzfahrzeugs oder einer Druckversorgungsanlage des Nutzfahrzeugs zu erreichen. Auch ist denkbar, derartige Schnittstellenelemente im Zusammenhang mit der Bremsanlage des Nutzfahrzeugs einzusetzen.

Eine redundante Versorgung des Schnittstellenelements über mindestens zwei Spannungsversorgungen kann erfolgen. Denkbar ist, dass das Schnittstellenelement einen integrierten Energiespeicher aufweist. Weiter ist möglich, dass zur Energieversorgung alternativ und/oder zusätzlich ein Anschluss an das Energieversorgungssystem des Nutzfahrzeugs erfolgen kann.

Der Anschluss an die Datenschnittstelle des Nutzfahrzeugs kann ein kabelgebundener Anschluss sein oder einen kabelgebundenen Anschluss umfassen. Denkbar ist aber auch, dass der Anschluss an die Datenschnittstelle des Nutzfahrzeugs ein Funkanschluss ist oder einen Funkanschluss umfasst.

Grundsätzlich kann vorgesehen sein, dass eine kabelgebundene oder eine kabellose Datenschnittstelle vorhanden und etabliert ist.

Des Weiteren kann vorgesehen sein, dass das Schnittstellenelement an das Stromversorgungsnetz des Nutzfahrzeugs anschließbar ist und/oder im montierten Zustand an das Stromversorgungsnetz des Nutzfahrzeuges angeschlossen ist.

Außerdem kann vorgesehen sein, dass das Schnittstellenelement eine Schnittstelle zu einem mobilen Endgerät, insbesondere einem Smartphone und/oder einem TabletPC aufweist. Hierdurch kann beispielsweise eine Fernwartungsfunktionalität etabliert werden.

Denkbar ist auch, das Fahrzeug online überwachen zu können und somit aus der Ferne den Fahrzustand und Betriebszustand des Nutzfahrzeuges kontinuierlich überwachen zu können.

Es kann außerdem vorgesehen sein, eine Online-Fehlerüberwachung der Betriebssysteme des Nutzfahrzeugs vornehmen zu können.

Über die vorstehend beschriebene optionale Datenloggerfunktion ist es auch denkbar, die online gewonnenen Daten gleichzeitig auch aufzuzeichnen.

Es ist also möglich, dass das Schnittstellenelement eine Datenloggerfunktion mit gleichzeitiger Online-Überwachung ermöglicht und ausbildet.

Das Schnittstellenelement und seine elektronischen Komponenten können ein verschlüsseltes Kommunikationsprotokoll aufweisen. Über das verschlüsselte Kommunikationsprotokoll wird es möglich, eine Absicherung gegen ein Hacking und einen unauthorisierten Datenabfluss oder eine feindliche Fernübernahme der Kontrollsysteme des Nutzfahrzeugs zu verhindern.

Das Schnittstellenelement kann weiter eine Auswerteeinheit aufweisen, mittels derer im Schnittstellenelement Messsignale auswertbar sind, insbesondere Messsignale des im Steckelement angeordneten wenigstens einen Sensors automatisch auswertbar sind.

Darüber hinaus kann vorgesehen sein, dass das Schnittstellenelement eine Überwachungseinheit aufweist, mittels derer laufend erhaltene Messsignale zur Überwachung des Betriebszustandes des Nutzfahrzeuges automatisch überwachbar sind.

Auch kann vorgesehen sein, dass das Schnittstellenelement eine Signalabgleicheinheit aufweist, mittels derer Steuer- und/oder Regelsignale im Schnittstellenelement und im Nutzfahrzeug abgleichbar sind.

Die Erfindung betrifft des Weiteren ein Nutzfahrzeug mit wenigstens einem Schnittstellenelement wie vorstehend beschrieben.

Darüber hinaus betrifft die vorliegende Erfindung ein Verfahren zur zumindest teilweisen Messung und/oder Steuerung und/oder Regelung und/oder Überwachung eines Nutzfahrzeugs, wobei die zumindest teilweise Messung und/oder Steuerung und/oder Regelung und/oder Überwachung des Nutzfahrzeugs nicht von zentralen Steuergeräten in der Fahrzeugarchitektur, sondern dezentral durch wenigstens ein Schnittstellenelement, insbesondere ein Schnittstellenelement durchgeführt wird.

Erfindungsgemäß wird im Rahmen des Verfahrens das Schnittstellenelement verwendet, um eine Ansteuerung von Ventilen des ABS-Systems des Nutzfahrzeugs, des elektronischen Bremssystems des Nutzfahrzeugs, der Luftfederung des Nutzfahrzeugs oder einer Luftaufbereitungsanlage des Nutzfahrzeugs oder einer Druckversorgungsanlage des Nutzfahrzeugs bereit zu stellen.

Über das Schnittstellenelement kann eine zusätzliche Steuerung- und/oder Regelung zu den bereits ohnehin vorhandenen Steuer- und/oder Regelungssystemen und - komponenten des Nutzfahrzeugs erfolgen.

Auch ist denkbar, im Rahmen des Verfahrens derartige Schnittstellenelemente im Zusammenhang mit der Bremsanlage des Nutzfahrzeugs einzusetzen.

Eine redundante Versorgung des Schnittstellenelements über mindestens zwei Spannungsversorgungen kann erfolgen.

Denkbar ist, dass die Energieversorgung des Schnittstellenelements autark und nicht über die zentrale Energieversorgung des Nutzfahrzeugs erfolgt. Hierzu kann das Schnittstellenelement einen integrierten Energiespeicher aufweisen.

Denkbar ist aber auch, dass zur Energieversorgung alternativ und/oder zusätzlich ein Anschluss an das Energieversorgungssystem des Nutzfahrzeugs erfolgen kann.

Weitere Einzelheiten und Vorteile der Erfindung sollen nun anhand eines in den Zeichnungen näher dargestellten Ausführungsbeispiels erläutert werden.

### Es zeigen :

- Fig. 1: eine schematische Darstellung einer Bremsanlage mit einer Luftaufbereitungseinheit und einem erfindungsgemäßen Ausführungsbeispiel eines Steckelements für ein erfindungsgemäßes Nutzfahrzeug zur Durchführung eines erfindungsgemäßen Ausführungsbeispiels eines Verfahrens zur teilweisen Steuerung und/oder Regelung und/oder Überwachung eines Nutzfahrzeugs;
- Fig. 2: ein erstes Ausführungsbeispiel eines erfindungsgemäßen Steckelementes;
- Fig. 3: ein zweites Ausführungsbeispiel eines erfindungsgemäßen Steckelementes; und
- Fig.4: ein Beispiel eines möglichen Anschlusses des Steckelementes an die Fahrzeugarchitektur des Nutzfahrzeugs.

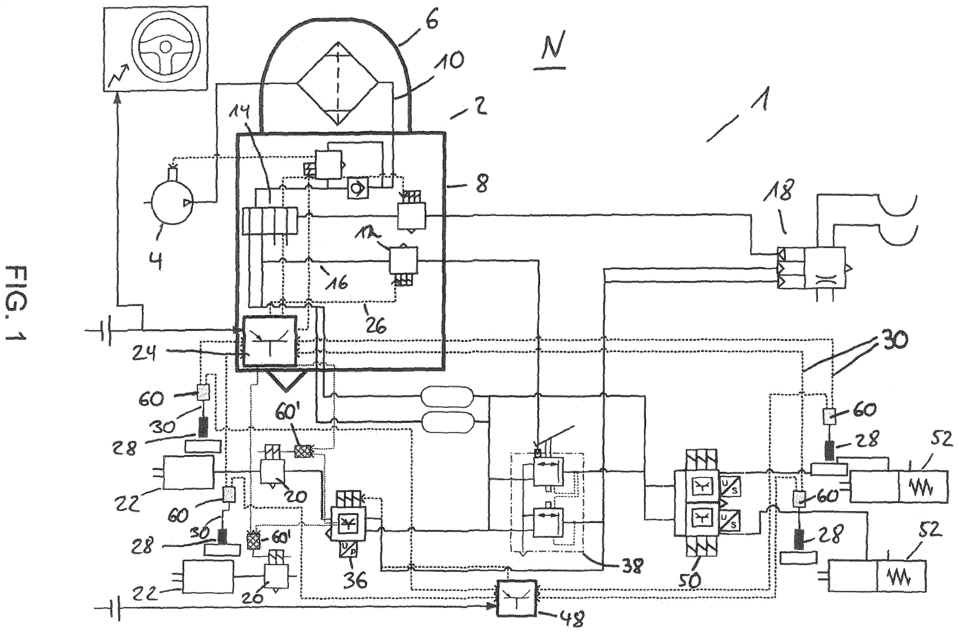

**Fig. 1** zeigt eine schematische Darstellung einer Bremsanlage 1 für ein Nutzfahrzeug mit einer Luftaufbereitungseinheit 2 und einem erfindungsgemäßen Ausführungsbeispiel eines Steckelements 60 sowie 60' für ein erfindungsgemäßes Nutzfahrzeug N zur Durchführung eines erfindungsgemäßen Ausführungsbeispiels eines Verfahrens zur teilweisen Steuerung und/oder Regelung und/oder Überwachung des Nutzfahrzeugs N.

Grundsätzlich können die Steckelemente 60 und 60' nicht nur im Zusammenhang mit dem in Fig. 1 gezeigten Ausführungsbeispiel in Zusammenhang mit einer Bremsanlage und Luftaufbereitungseinheit des Nutzfahrzeugs verwendet werden. Denkbar ist eine Anwendung in Zusammenhang mit sämtlichen elektronischen Systemen des Nutzfahrzeugs N.

Die Luftaufbereitungseinheit 2 umfasst eine mit einem Kompressor 4 verbundene Filterkartusche 6 zum Filtern und Trocknen der von dem Kompressor 4 bereitgestellten Druckluft.

Die Filterkartusche 6 ist an einem Gehäuse 8 der Luftaufbereitungseinheit 2 angeordnet und über eine Filterkartuschenleitung 10 mit dem Gehäuse 8 pneumatisch verbunden.

In dem Gehäuse 8 ist ein Beaufschlagungsventil 12 angeordnet.

Gemäß diesem Ausführungsbeispiel ist das Beaufschlagungsventil 12 über eine Verteilereinheit 14 mit der Filterkartuschenleitung 10 verbunden.

Dabei ist das Beaufschlagungsventil 12 in der Verbindungsleitung 16 angeordnet. Für eine vorteilhafte Funktion kann der Druckabgriff auch vor der Verteilereinheit 14 angeordnet sein.

Es ist gemäß einem Ausführungsbeispiel wichtig, dass der Versorgungsdruck für das Beaufschlagungsventil 12 stabil ist, das heißt, nicht mit ausbleibender Kompressorförderung auf Null fällt.

Somit kann der Druckabgriff in diesem Ausführungsbeispiel auch noch zwischen der Verteilereinheit 14 und dem Rückschlagventil liegen.

In bekannter Form ist die Luftaufbereitungseinheit 2 beispielhaft mit zwei Steuerventilen 20, die je einem von zwei vorderen Radbremszylindern 22 einer Vorderachse des Nutzfahrzeugs vorgeschaltet sind, pneumatisch gekoppelt.

Ebenfalls wird über die Luftaufbereitungseinheit 2 ein Anhängersteuermodul 18 versorgt.

Ein ebenfalls in dem Gehäuse 8 angeordnetes Steuergerät 24 ist ausgebildet, um das Beaufschlagungsventil 12 durch Ausgeben eines entsprechenden Steuersignals 26 anzusteuern.

Die Steuerventile 20 sind ausgebildet, um einen jeweiligen Bremsdruck in den vorderen Radbremszylindern 22 zu ändern.

Die Ansteuerung der Steuerventile 20 durch die Luftaufbereitungseinheit 2 erfolgt beispielsweise derart, dass ein Blockieren der Räder beim Bremsen verhindert wird oder das Nutzfahrzeug einseitig abgebremst wird.

Gemäß diesem Ausführungsbeispiel ist das Beaufschlagungsventil 12 ausgebildet, um den Steuerventilanschluss 18 mit einem Solldruck zu beaufschlagen, der stufbar zwischen Umgebungsdruck und Betriebsdruck ausregelbar ist, wobei beispielsweise dieser Solldruck teils direkt vom Magnetventil, teils luftmengenverstärkt von einem Relaisventil entnommen werden kann.

Alternativ kann das Beaufschlagungsventil 12 ausgebildet sein, um den Steuerventilanschluss 18 mit einem Steuerdruck zum pneumatischen Ansteuern eines den beiden Steuerventilen 20 vorgeschalteten Ventils oder Ventilmoduls der Bremsanlage 1, etwa eines Relaisventils, als dem Solldruck zu beaufschlagen.

Beispielhaft ist das Nutzfahrzeug mit insgesamt vier optionalen Raddrehzahlsensoren 28 zum Erfassen einer Drehzahl je eines Rades an Vorder- und Hinterachse ausgestattet.

Die Raddrehzahlsensoren 28 senden je ein die jeweilige Drehzahl eines Rades repräsentierendes Raddrehzahlsensorsignal 30 an das Steuergerät 24, wobei das Steuergerät 24 ausgebildet ist, um das Beaufschlagungsventil 12 unter Verwendung der Raddrehzahlsensorsignale 30, d. h. in Abhängigkeit von der jeweiligen Drehzahl der Räder, anzusteuern.

Optional verwendet das Steuergerät 24 die Raddrehzahlsensorsignale 30, um zusätzlich oder alternativ zum Beaufschlagungsventil 12 die beiden Steuerventile 20 direkt elektrisch anzusteuern, insbesondere derart, dass beim Abbremsen des Nutzfahrzeugs ein Blockieren der Vorderräder vermieden wird oder das Nutzfahrzeug zusätzlich einseitig abgebremst wird.

Mittels des Beaufschlagungsventils 12 kann die Bremsanlage 1 in bekannter Form angesteuert werden.

Eine Parkbremsfunktion ist ebenfalls in geeigneter Art und Weise, wie aus dem Stand der Technik bekannt, realisiert.

Die beiden vorderen Radbremszylinder 22 sind über ein Vorderachsenventilmodul 36 mit einem Fußbremsmodul 38 der Bremsanlage 1 verbunden.

Die beiden Steuerventile 20 sind zwischen den vorderen Radbremszylindern 22 und dem Vorderachsenventilmodul 36 angeordnet.

Die in Fig. 1 gezeigte Bremsanlage 1 ist beispielhaft durch ein EBS-Steuergerät 48 eines elektronisches Bremssystems des Nutzfahrzeugs ansteuerbar.

Hierzu ist das EBS-Steuergerät 48 beispielsweise mit den Raddrehzahlsensoren 28, dem Fußbremsmodul 38 und dem Vorderachsenventilmodul 36 zur elektrischen Signalübertragung verbunden.

Gemäß einem Ausführungsbeispiel ist das Steuergerät 24 der Luftaufbereitungseinheit 2 ausgebildet, um das Beaufschlagungsventil 12 bei Ausfall des elektronischen Bremssystems anzusteuern, sodass weiterhin eine ausreichende Bremsleistung an der Vorderachse des Nutzfahrzeugs gewährleistet werden kann.

Das Fußbremsmodul 38 ist des Weiteren über ein Hinterachsenventilmodul 50 mit zwei hinteren Radbremszylindern 52 der Hinterachse des Nutzfahrzeugs verbunden. Lediglich beispielhaft sind im Unterschied zur Vorderachse keine ABS-Steuerventile zwischen dem Hinterachsenventilmodul 50 und den hinteren Radbremszylindern 52 angeordnet.

Gemäß diesem Ausführungsbeispiel sind die beiden hinteren Radbremszylinder 52 ausgebildet, um die Hinterräder des Nutzfahrzeugs im entlüfteten Zustand mittels Federkraft zu blockieren.

Die hinteren Radbremszylinder 52 sind somit Bestandteil der Feststell- oder Parkbremsfunktion.

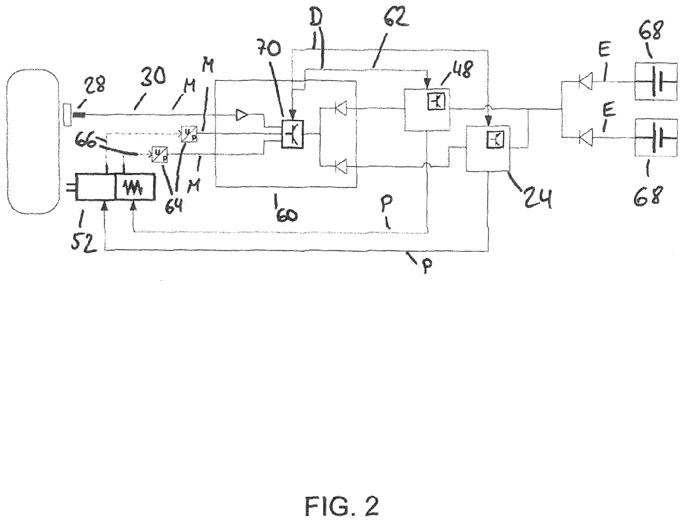

**Fig. 2** zeigt ein erstes Ausführungsbeispiel eines erfindungsgemäßen Schnittstellenelementes in Form eines Steckelementes 60.

Das erfindungsgemäße Steckelement 60 in dieser Ausführungsform ist als Steckelement mit integrierter Sensorfunktion Auswertelogik und zum Anschluss an Sensoren, hier einen Raddrehzahlsensor 28 mit Raddrehzahlsensorsignal 30 und Drucksensoren 64, ausgebildet.

Das Steckelement 60 ist über einen Anschluss 62 direkt oder mittelbar an das EBS-Steuergerät 48 wie in Fig. 1 gezeigt anschließbar. Auch ein Anschluss an das Steuergerät 24 ist vorgesehen.

In Fig. 2 sind elektrische Leitungen mit E, Datensignalleitungen mit dem Bezugszeichen D, Pneumatikleitungen mit P und Messsignalleitungen mit M bezeichnet.

Das Steckelement 60 weist zwei Drucksensoren (Druck-Spannungswandler) 64 auf, die mit entsprechenden Messsignalleitungen 66 an beispielsweise die hinteren Radbremszylinder 52 angeschlossen sein können.

Auch hier ist eine entsprechende Steckverbindung für die Messleitungen 66 denkbar.

Denkbar ist aber auch, dass das gezeigte Layout des Schnittstellenelementes 60 insgesamt auch Kabelelement und nicht als Steckelement ausgebildet ist.

Weiter weist das Steckelement 60 Anschlüsse an zwei Batterien 68 auf, mittels derer beispielsweise Beschleunigungen oder auch die Raddrehzahl gemessen werden können.

Darüber hinaus weist das Steckelement 60 einen Mikrocontroller 70 auf.

Der Mikrocontroller 70 kann eine Auswerteeinheit zur Ausbildung einer Auswertefunktion, eine Überwachungseinheit zur Ausbildung einer Überwachungsfunktion sowie eine Signalabgleicheinheit zur Ausbildung einer Signalabgleichungsfunktion aufweisen.

Die Elektronik des Steckelements 60 ist wasserdicht gekapselt, hier durch die Ausbildung des Steckelements 60 als halbschaliges Gehäuse mit einer Gel-Füllung oder Vergussmasse zur Erreichung der Wasserdichtheit.

Alternativ kann auch eine Vollumspritzung des Steckelements 60 sowie der im Steckelement 60 vorhandenen Elektronik erfolgen.

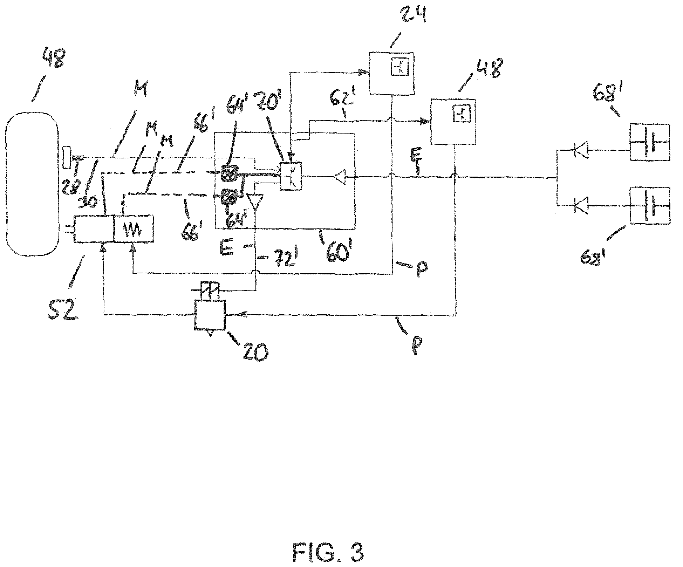

**Fig. 3** zeigt ein im Wesentlichen baugleich aufgebautes Steckelement 60', das sämtliche strukturellen und funktionalen Merkmale wie auch das Steckelement 60 gemäß Fig. 2 aufweist.

Entsprechend identische Elemente sind lediglich mit einem gestrichenen Bezugszeichen bzw. identischen Bezugszeichen näher bezeichnet.

Das Steckelement 60' weist zusätzlich eine Aktuatorfunktion auf. Hier ist eine elektrische Steuerleitung 72' vorgesehen, mittels derer ein Magnetventil, hier das Steuerventil 20 (vgl. Fig. 1) angesteuert werden kann.

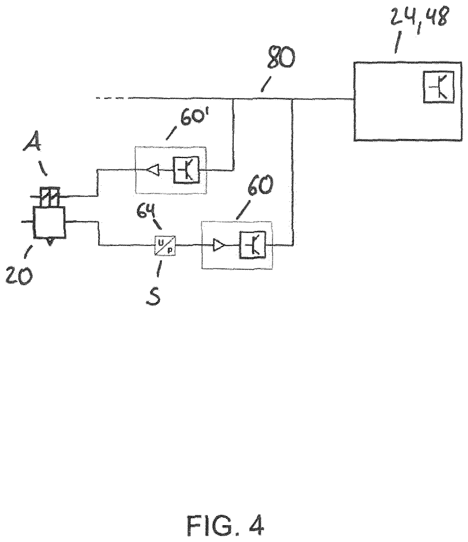

Wie in **Fig. 4** gezeigt, kann mittels des Steckelements 60 bzw. 60' die Fahrzeugarchitektur des Nutzfahrzeugs, wie auch in Fig. 1 exemplarisch repräsentiert, durch die Bremsanlage 1 des Nutzfahrzeugs N erweitert werden. Durch das Anschließen des Steckelements 60 bzw. 60' an einen Datenbus 80 des Nutzfahrzeugs N werden weitere Ansteuermöglichkeiten an Aktuatoren A, hier exemplarisch repräsentiert durch ein Steuerventil 20, oder Sensorelemente S, hier exemplarisch repräsentiert durch einen Drucksensor 64, ermöglicht.

So wird auch beispielsweise im Hinblick auf das autonome Fahren eine vorteilhafte Verteilung von Funktionen über das gesamte Nutzfahrzeug N ermöglicht. Denkbar ist eine nicht redundante Drehzahlauswertung des EBS-Systems im Steckelement 60 bzw. 60'. Hierdurch wird auch eine redundante ECU- und EAC-Modularität ermöglicht, da über das Steckelement 60 bzw. 60' Zugriff hierauf herrscht.

Es kann mit Standardsensoren gearbeitet werden.

Bestehende Fahrzeugsysteme eines Nutzfahrzeugs N können erweitert werden (vgl. Fig. 4), um beispielsweise höherwertige Sensorinformationen und Funktionen bereitstellen zu können. Hier kann insbesondere intelligente Elektronik in bestehende Fahrzeugsysteme nachgerüstet werden.

Eine platzsparende, variable und ortsunabhängige Fixierung des Steckelements 60 bzw. 60' kann an Stellen erfolgen, an denen Bauraum vorhanden ist, um Steuerfunktionen und auch entsprechende Hardware und Steuerelektronik in das Steckelement 60 bzw. 60' zu integrieren.

Eine Anbindung an das EBS-System 48 bzw. das Steuergerät 24 oder andere Steuerungs- und/oder Regelungssysteme des Nutzfahrzeugs N kann entweder kabelgebunden oder kabellos, beispielsweise über Funk erfolgen.

Mehrere Steuerungsausgänge können an dem Steckelement 60 bzw. 60' vorgesehen sein. Analog zu einem sensierenden Steckelement 60 besteht auch die Möglichkeit eine kaskedierte Regelung, angepasst an einen Aktuator A, bereitzustellen (vgl. Fig. 3).

Es ist denkbar, die komplette Signalvereinbarung einmalig für alle an den Datenbus angeschlossenen redundanten Systeme verfügbar zu machen.

Duch die kompakte Bauweise und des geringen Eigengewichts des Steckelements 60 bzw. 60' ist auch Vibrationsbeständigkeit gegeben.

Bei Zusatzfunktionen ist es auch möglich, ein Update ohne eine Modifikation des angeschlossenen Hauptgeräts, hier beispielsweise des EBS-Systems 48 oder EAC-Systems, durchführen zu können. Es ist einfach nur erforderlich, die Steckelemente 60 bzw. 60' teilweise oder ganz auszutauschen oder diese durch ein Update entsprechend auf den neuesten Stand zu bringen.

Denkbar ist weiter, eine mobile Kommunikationsschnittstelle, zum Beispiel über WLAN, Bluetooth oder andere Funkprotokolle anschließen zu können. Über diese Schnittstelle ist die Koppelung mit mobilen Endgeräte möglich, z.B. mit einem Smartphone oder einem Tablet PC und/oder auch generell an einen Server im Internet. Denkbar ist auch der Anschluss an ein Online-Überwachungssystem, das zur Fernwartung, zur Datenaufzeichnung, Fernsteuerung oder dergleichen verwendet wird.

Es wird ein zusätzliches Gehäuse und auch eine Steckverbindung insgesamt eingespart, da nicht ein gesondertes weiteres zentrales Steuerungs- und/oder Regelungsgerät integriert werden muss.

Vielmehr werden einfach Steckelemente 60 bzw. 60' an geeigneten Stellen in das System integriert.

Denkbar ist weiter, eine Konditionierung von Sensorsignalen vorzunehmen, beispielsweise eine Kennfeldanpassung. Auch ist denkbar, einen Sensortausch mit geändertem Kennfeld ohne Modifikation der zentralen Steuergeräte des Bremssystems bzw. Nutzfahrzeugs N vornehmen zu können.

Die Steckelemente 60 bzw. 60' können Analogausgänge aufweisen. Mehrere unterschiedliche Sensoren mit unterschiedlichen Ausgangssignalen können in einem Steckelement 60 bzw. 60' bereitgestellt werden.

Insgesamt resultiert dies in einer deutlichen Einsparung von Eingängen und Ausgängen (Input/Output) am Hauptsteuergerät, beispielsweise dem EBS-System 48 oder dem EAC-System. Im Extremfall erfolgt nur eine Datenbus-Anschlussverlagerung von Steuerungsfunktionen und Hardware in das Steckelement 60 bzw. 60' (vgl. hierzu auch Fig. 2, 3 und 4).

Es können mehrere Steuerungsausgänge vorgesehen sein, die ausgehend von einem Sollwert aus der Datenschnittstelle entsprechend Komponenten des Nutzfahrzeugs N ansteuern, vgl. Fig. 3, hier Ansteuerung über die Leitung 72 des Steuerventils 20.

Eine kaskadierte Regelung kann angepasst an den Aktuator bereitgestellt werden.

Auch ohne Modifikation der zentralen Steuergeräte könnte ein Nutzfahrzeug N und sein Steuersystem an einen neuen Aktuator durch geänderte Anforderungen und Funktionen im Steckelement 60 bzw. 60' adaptiert werden.

Dies kann beispielsweise auch bereits nur durch eine entsprechende Softwareänderung des Steckelements erfolgen.

Hier wäre ein entsprechendes Softwareupdate über den Mikrocontroller 70 und entsprechende Speichermöglichkeiten im Steckelement 60 bzw. 60' möglich.

Über die Steckelemente 60 bzw. 60' und die dort vorhandene intelligente Elektronik ist es auch möglich, grundsätzlich die Sensorsignale im gesamten Nutzfahrzeug N zu überwachen und hierdurch beispielsweise Kabelbrüche oder sonstige Systemfehler erkennen zu können und hierdurch ein Fail-Safe-Prinzip bzw. einen derartigen Zustand herstellen zu können.

Eine abhörsichere Kommunikation des Sensorsignals ist auch durch verschlüsselte Weitergabe über den Datenbus 80 möglich.

Eine mögliche Anwendung von Schnittstellenelementen 60, 60' kann analog dem Ausführungsbeispiel nach Fig. 4 verwirklicht werden, dass nur (z.B. analoge) Messsignale mttels des Schnittstellenelements 60 ausgewertet und diese in einem standardisierten Datenformat auf einen Datenbus 80 gelegt werden, so dass alle Steuergeräte, also zum Beispiel auch zwei sich redundant absichernde Steuergeräte gleichzeitig auf dieses eine Messignal im Datenformat mit geringem Zusatzaufwand zugreifen können, indem beide Steuergeräte kostengünstig lediglich an denselben Datenbus angeschlossen sein müssen. Ein Beispiel wäre die Erfassung der Raddrehzahlsignale, die in dem Schnittstellenelement 60 geleistet werden könnte. Gleichzeitig könnte das Schnittstellenelement diese Signale eben auch auf Fehler überwachen und erkannte Fehler über spezielle Werte des digitalen Messsignals für beliebig viele Steuergeräte auf den Datenbus 80 legen. So wird das Messsignal für alle angeschlossenen Steuergeräte allein über das Schnittstellenelement zu einem vervielfältigten, abgesicherten Messsignal, das ohne Aufwand auf Seiten der Zentralsteuergeräte von diesen allein über den Datenwert als gültiger oder eben unplausibler Messwert erkannt werden kann.

Als kleinste, denkbare Einheit aus einfachsten Schnittstellenelementen wäre dies die einfache Kopplung von zwei Schnittstellenelementen an ihrer Datenschnittstelle, wobei ein Schnittstellenelement 60 einen Sensor ausliest und das andere Schnittstellenelement 60' einen Aktuator ansteuert. Beide Schnittstellenelemente 60, 60' können miteinander über die Datenschnittstelle die Regelungsgrößen austauschen,und in einem Regelkreis Messwerte auf der einen Seite des Verbunds einlesen und Aktuatoren auf der anderen Seite ansteuern. Im Unterschied zu dem in Fig. 4 gezeigten Layout kann auf das Hauptsteuergerät 24 bzw. 48 verzichtet werden.

### BEZUGSZEICHENLISTE

- 1: Bremsanlage
- 2: Luftaufbereitungseinheit
- 4: Kompressor
- 6: Filterkartusche
- 8: Gehäuse
- 10: Filterkartuschenleitung
- 12: Beaufschlagungsventil
- 14: Verteilereinheit
- 16: Verbindungsleitung
- 18: Anhängersteuermodul
- 20: Steuerventil
- 22: Radbremszylinder
- 24: Steuergerät
- 26: Steuersignal
- 28: Raddrehzahlsensoren
- 30: Raddrehzahlsensorsignal
- 36: Vorderachsenventilmodul
- 38: Fußbremsmodul
- 48: EBS-Steuergerät
- 50: Hinterachsenventilmodul
- 52: Radbremszylinder
- 60: Schnittstellenelement
- 62: Anschluss
- 64: Drucksensor
- 66: Messsignalleitungen
- 68: Batterie
- 70: Mikrocontroller
- 72: Leitung
- 80: Datenbus

- A: Aktuatoren
- E: elektrische Leitungen
- D: Datensignalleitungen
- P: Pneumatikleitungen
- M: Messsignalleitungen
- N: Nutzfahrzeug
- S: Sensorelemente

- 60': Schnittstellenelement
- 62': Anschluss
- 64': Drucksensor
- 66': Messsignalleitungen
- 68': Batterie
- 70': Mikrocontroller
- 72': elektrische Steuerleitung

## Patentansprüche

1. Schnittstellenelement (60; 60') für ein Nutzfahrzeug (N), umfassend elektronische Komponenten, wobei die elektronischen Komponenten wenigstens einen Anschluss (62; 62') an wenigstens eine Datenschnittstelle eines Fahrzeugs (N) aufweisen, wobei der Anschluss (62; 62') geeignet und beschaffen ist zum Austausch von Messdaten und/oder Steuerungs- und/oder Regelungsdaten zur Regelung von elektronischen Komponenten, wobei das Schnittstellenelement (60; 60') weiter wenigstens eine integrierte Mess- und/oder Steuerungs- und/oder Regelungseinheit aufweist, **dadurch gekennzeichnet, dass** das Schnittstellenelement (60; 60') als Steckelement ausgebildet ist und dass durch das Schnittstellenelement (60; 60') eine Ansteuerung von Ventilen eines ABS-Systems des Nutzfahrzeugs, eines elektronischen Bremssystems des Nutzfahrzeugs, einer Luftfederung des Nutzfahrzeugs oder einer Luftaufbereitungsanlage des Nutzfahrzeugs oder einer Druckversorgungsanlage des Nutzfahrzeugs erreichbar ist.

2. Schnittstellenelement (60; 60') nach Anspruch 1,
**dadurch gekennzeichnet, dass**
die integrierte Mess- und/oder Steuerungs- und/oder Regelungseinheit einen Mikrocontroller (70; 70') ist oder einen Mikrocontroller (70; 70') umfasst.

3. Schnittstellenelement (60; 60') nach Anspruch 2,
**dadurch gekennzeichnet, dass**
die integrierte Mess- und/oder Steuerungs- und/oder Regelungseinheit weiter einen Prozessor und/oder eine integrierte Schaltung und/oder oder wenigstens eine Datenschnittstelle umfasst.

4. Schnittstellenelement (60; 60') nach einem der vorhergehenden Ansprüche,
**dadurch gekennzeichnet, dass**
das Schnittstellenelement (60; 60') in einem Kabel oder als Kabelelement, insbesondere Verbindungskabel ausgebildet ist.

5. Schnittstellenelement (60; 60') nach einem der vorhergehenden Ansprüche, **dadurch gekennzeichnet, dass**
die elektronischen Komponenten wasserdicht geschützt ausgebildet sind.

6. Schnittstellenelement (60; 60') nach einem der vorhergehenden Ansprüche,
**dadurch gekennzeichnet, dass**
das Schnittstellenelement (60; 60') mit einem Sensor verbindbar oder verbunden ist.

7. Schnittstellenelement (60; 60') nach einem der vorhergehenden Ansprüche,
**dadurch gekennzeichnet, dass**
der Sensor ein Raddrehzahlsensor ist.

8. Schnittstellenelement (60') nach einem der vorhergehenden Ansprüche,
**dadurch gekennzeichnet, dass**
das Schnittstellenelement (60') mit einem Aktuator verbindbar oder verbunden ist.

9. Schnittstellenelement (60; 60') nach einem der vorhergehenden Ansprüche,
**dadurch gekennzeichnet, dass**
der Anschluss (62; 62') ein kabelgebundener Anschluss ist oder einen kabelgebundenen Anschluss umfasst

10. Schnittstellenelement nach (60; 60') einem der vorhergehenden Ansprüche,
**dadurch gekennzeichnet, dass**
der Anschluss (62; 62') ein Funkanschluss ist oder einen Funkanschluss umfasst.

11. Schnittstellenelement nach (60; 60') einem der vorhergehenden Ansprüche,
**dadurch gekennzeichnet, dass**
der Anschluss (62; 62') ein optischer Anschluss ist oder einen optischen Anschluss umfasst.

12. Schnittstellenelement nach (60; 60') einem der vorhergehenden Ansprüche,
**dadurch gekennzeichnet, dass**
der Anschluss (62; 62') ein magnetischer Anschluss ist oder einen magnetischen Anschluss umfasst.

13. Schnittstellenelement (60; 60') nach einem der vorhergehenden Ansprüche,
**dadurch gekennzeichnet, dass**
das Schnittstellenelement (60; 60') an eine externe Energieversorgungsquelle anschließbar oder angeschlossen ist.

14. Schnittstellenelement (60; 60') nach einem der vorhergehenden Ansprüche,
**dadurch gekennzeichnet, dass**
das Schnittstellenelement (60; 60') an eine interne Energieversorgungsquelle anschließbar oder angeschlossen ist, insbesondere wobei die interne Energieversorgungsquelle eine Batterie ist oder umfasst.

15. Schnittstellenelement (60; 60') nach einem der vorhergehenden Ansprüche,
**dadurch gekennzeichnet, dass**
das Schnittstellenelement (60; 60') eine Schnittstelle zu einem Flottenmanagementsystem und/oder einem mobilen Endgerät, insbesondere einem Smartphone und/oder einem TabletPC aufweist.

16. Schnittstellenelement (60; 60') nach einem der vorhergehenden Ansprüche,
**dadurch gekennzeichnet, dass**
das Schnittstellenelement (60; 60') ein verschlüsseltes Kommunikationsprotokollsystem aufweist, das derart konfiguriert ist, dass mittels des Kommunikationsprotokollsystems das Schnittstellenelement (60; 60') Daten austauscht oder austauschen kann.

17. Schnittstellenelement (60; 60') nach einem der vorhergehenden Ansprüche,
**dadurch gekennzeichnet, dass**
das Schnittstellenelement (60; 60') eine Überwachungseinheit aufweist, mittels derer laufend erhaltene Messsignale (M) zur Überwachung des Betriebszustandes eines Fahrzeugs automatisch überwachbar sind.

18. Schnittstellenelement (60; 60') nach einem der vorhergehenden Ansprüche,
**dadurch gekennzeichnet, dass**
das Schnittstellenelement (60; 60') eine Signalabgleicheinheit aufweist, mittels derer Mess- und/oder Steuer- und/oder Regelsignale im Schnittstellenelement (60; 60') und im Fahrzeug (N) abgleichbar und/oder plausibilisierbar sind.

19. Nutzfahrzeug
mit wenigstens einem Schnittstellenelement (60; 60') nach einem der vorhergehenden Ansprüche.

20. Verfahren zur zumindest teilweise Messung und/oder Steuerung und/oder Regelung und/oder Überwachung eines Nutzfahrzeugs (N), wobei die zumindest teilweise Messung und/oder Steuerung und/oder Regelung und/oder Überwachung des Nutzfahrzeugs (N) nicht von zentralen Steuergeräten in der Fahrzeugarchitektur, sondern dezentral durch wenigstens ein Schnittstellenelement (60; 60') nach einem der Ansprüche 1 bis 18 durchgeführt wird.

## Claims

1. Interface element (60; 60') for a utility vehicle (N), comprising electronic components, wherein the electronic components comprise at least one connection (62; 62') to at least one data interface of a vehicle (N), wherein the connection (62; 62') is suitable and is provided for the exchange of measurement data and/or control and/or regulation data for the control of electronic components, wherein the interface element (60; 60') also comprises at least one integrated measurement and/or control and/or regulation unit,
**characterised in that**
the interface element (60; 60') is in the form of a plug-in element and by virtue of the interface element (60; 60'), valves of an ABS system of the utility vehicle, valves of an electronic brake system of the utility vehicle, valves of an air suspension system of the utility vehicle N or valves of an air treatment unit of the utility vehicle or valves of a pressure supply unit of the utility vehicle can be activated.

2. Interface element (60; 60') according to Claim 1,
**characterised in that**
the integrated measurement and/or control and/or regulation unit is a microcontroller (70; 70') or contains a microcontroller (70; 70').

3. Interface element (60; 60') according to Claim 2,
**characterised in that**
the integrated measurement and/or control and/or regulation unit also comprises a processor and/or an integrated circuit and/or one and/or at least one data interface.

4. Interface element (60; 60') according to any of the preceding claims,
**characterised in that**
the interface element (60; 60') is in a cable or is in the form of a cable element, in particular a connection cable.

5. Interface element (60; 60') according to any of the preceding claims,
**characterised in that**
the electronic components are made with watertight protection.

6. Interface element (60; 60') according to any of the preceding claims,
**characterised in that**
the interface element (60; 60') is or can be connected to a sensor.

7. Interface element (60; 60') according to any of the preceding claims,
**characterised in that**
the sensor is a wheel rotation speed sensor.

8. Interface element (60') according to any of the preceding claims,
**characterised in that**
the interface element (60') is or can be connected to an actuator.

9. Interface element (60; 60') according to any of the preceding claims,
**characterised in that**
the connection (62; 62') is or comprises a wired connection.

10. Interface element (60; 60') according to any of the preceding claims,
**characterised in that**
the connection (62; 62') is or comprises a radio connection.

11. Interface element (60; 60') according to any of the preceding claims,
**characterised in that**
the connection (62; 62') is or comprises an optical connection.

12. Interface element (60; 60') according to any of the preceding claims,
**characterised in that**
the connection (62; 62') is or comprises a magnetic connection.

13. Interface element (60; 60') according to any of the preceding claims,
**characterised in that**
the interface element (60; 60') is or can be connected to an external energy source.

14. Interface element (60; 60') according to any of the preceding claims,
**characterised in that**
the interface element (60; 60') is or can be connected to an internal energy source, in particular such that the internal energy source is or comprises a battery.

15. Interface element (60; 60') according to any of the preceding claims,
**characterised in that**
the interface element (60; 60') comprises an interface to a fleet management system and/or a mobile terminal, in particular a Smartphone and/or a Tablet PC.

16. Interface element (60; 60') according to any of the preceding claims,
**characterised in that**
the interface element (60; 60') has an encrypted communication protocol system which is configured in such manner that by means of the communication protocol system, the interface element (60; 60') exchanges or can exchange data.

17. Interface element (60; 60') according to any of the preceding claims,
**characterised in that**
the interface element (60; 60') comprises a monitoring unit by means of which continuously received measurement signals (M) can be monitored automatically in order to monitor the operating condition of a vehicle.

18. Interface element (60; 60') according to any of the preceding claims,
**characterised in that**
the interface element (60; 60') comprises a signal comparison unit by means of which measurement and/or control and/or regulation signals in the interface element (60; 60') and in the vehicle (N) can be compared and/or their plausibility checked.

19. Utility vehicle with at least one interface element (60; 60') according to any of the preceding claims.

20. Method for the at least partial measurement and/or control and/or regulation and/or monitoring of a utility vehicle (N), wherein the at least partial measurement and/or control and/or regulation and/or monitoring of the utility vehicle (N) is carried out not by the central control units in the vehicle architecture, but in a decentralised manner by at least one interface element (60; 60') according to any of Claims 1 to 18.

## Revendications

1. Elément (60 ; 60') d'interface d'un véhicule (N) utilitaire, comprenant des composants électroniques, dans lequel les composants électroniques ont au moins une borne (62 ; 62') sur au moins une interface de données d'un véhicule (N), dans lequel la borne (62 ; 62') est propre à et est faite pour l'échange de données de mesure et/ou de données de commande et/ou de données de régulation pour la régulation de composants électroniques, dans lequel l'élément (60 ; 60') d'interface a en outre au moins une unité intégrée de mesure et/ou de commande et/ou de régulation,
**caractérisé en ce que**
l'élément (60 ; 60') d'interface est constitué sous la forme d'un élément à enficher et **en ce qu'**il peut être obtenu, par l'élément (60 ; 60') d'interface, une commande de soupape d'un système ABS du véhicule utilitaire, d'un système électronique de freinage du véhicule utilitaire, d'une suspension pneumatique du véhicule utilitaire ou d'une installation de traitement de l'air du véhicule utilitaire ou d'une installation d'alimentation en pression du véhicule utilitaire.

2. Elément (60 ; 60') d'interface suivant la revendication 1,
**caractérisé en ce que**
l'unité intégrée de mesure et/ou de commande et/ou de régulation est une micro-unité (70 ; 70') de commande ou contient une micro-unité (70 ; 70') de commande.

3. Elément (60 ; 60') d'interface suivant la revendication 2,
**caractérisé en ce que**
l'unité intégrée de mesure et/ou de commande et/ou de régulation comprend en outre un processeur et/ou un circuit intégré et/ou au moins une interface de données.

4. Elément (60 ; 60') d'interface suivant l'une des revendications précédentes,
**caractérisé en ce que**
l'élément (60 ; 60') d'interface est constitué en un câble sous la forme d'un élément de câble, notamment d'un câble de liaison.

5. Elément (60 ; 60') d'interface suivant l'une des revendications précédentes,
**caractérisé en ce que**
les composants électroniques sont constitués de manière protégée en étant étanches à l'eau.

6. Elément (60 ; 60') d'interface suivant l'une des revendications précédentes,
**caractérisé en ce que**
**en ce que** l'élément (60 ; 60') d'interface est relié à un capteur ou peut l'être.

7. Elément (60 ; 60') d'interface suivant l'une des revendications précédentes,
**caractérisé en ce que**
le capteur est un capteur de vitesse de rotation d'une roue.

8. Elément (60') d'interface suivant l'une des revendications précédentes,
**caractérisé en ce que** l'élément (60') d'interface est relié à un actionneur ou peut l'être.

9. Elément (60 ; 60') d'interface suivant l'une des revendications précédentes,
**caractérisé en ce que**
la borne (62 ; 62') est une borne à liaison par câble ou comprend une borne à liaison par câble.

10. Elément (60 ; 60') d'interface suivant l'une des revendications précédentes,
**caractérisé en ce que**
la borne (62 ; 62') est une borne radio ou comprend une borne radio.

11. Elément (60 ; 60') d'interface suivant l'une des revendications précédentes,
**caractérisé en ce que**
la borne (62 ; 62') est une borne optique ou comprend une borne optique.

12. Elément (60 ; 60') d'interface suivant l'une des revendications précédentes,
**caractérisé en ce que**
la borne (62 ; 62') est une borne magnétique ou comprend une borne magnétique.

13. Elément (60 ; 60') d'interface suivant l'une des revendications précédentes,
**caractérisé en ce que**
l'élément (60 ; 60') d'interface est connecté à une source extérieure d'alimentation en énergie ou peut l'être.

14. Elément (60 ; 60') d'interface suivant l'une des revendications précédentes,
**caractérisé en ce que**
l'élément (60 ; 60') d'interface est connecté à une source interne d'alimentation en énergie ou peut l'être, dans lequel notamment la source interne d'alimentation en énergie est une batterie ou comprend une batterie.

15. Elément (60 ; 60') d'interface suivant l'une des revendications précédentes,
**caractérisé en ce que**
l'élément (60 ; 60') d'interface a une interface avec un système de gestion de flotte ou avec un terminal mobile, notamment avec un téléphone intelligent et/ou avec une tablette PC.

16. Elément (60 ; 60') d'interface suivant l'une des revendications précédentes,
**caractérisé en ce que**
l'élément (60 ; 60') d'interface a un système de protocole de communication chiffré, qui est configuré de manière à ce que l'élément (60 ; 60') d'interface puisse échanger des données au moyen du système de protocole de communication.

17. Elément (60 ; 60') d'interface suivant l'une des revendications précédentes,
**caractérisé en ce que**
l'élément (60 ; 60') d'interface a une unité de contrôle au moyen de laquelle des signaux (M) de mesure obtenus en continu peuvent être contrôlés automatiquement pour le contrôle de l'état de fonctionnement d'un véhicule.

18. Elément (60 ; 60') d'interface suivant l'une des revendications précédentes,
**caractérisé en ce que**
l'élément (60 ; 60') d'interface a une unité d'ajustement du signal, au moyen de laquelle des signaux de mesure et/ou de commande et/ou de régulation peuvent être ajustés et/ou rendus vraisemblables dans l'élément (60 ; 60') d'interface et dans le véhicule (N).

19. Véhicule utilitaire comprenant au moins un élément (60 ; 60') d'interface suivant l'une des revendications précédentes.

20. Procédé de mesure et/ou de commande et/ou de régulation et/ou de contrôle au moins partiel d'un véhicule (N) utilitaire, dans lequel on effectue la mesure et/ou la commande et/ou la régulation et/ou le contrôle au moins partiel du véhicule (N) utilitaire, non par des appareils de commande centraux dans l'architecture du véhicule, mais de manière décentralisée par au moins un élément (60 ; 60') d'interface suivant l'une des revendications 1 à 18.
